# EUROPEAN PATENT APPLICATION

(11) **EP 4 502 206 A1**
(43) Date of publication of application: **05.02.2025**
(21) Application number: 22933444.6
(22) Date of filing: 24.03.2022
(51) Int. Cl.: C22C 21/10, C22F 1/00

(54) **ALUMINUM ALLOY AND ALUMINUM ALLOY PRODUCTION METHOD**

(71) Applicant: MITSUBISHI ELECTRIC CORPORATION, Chiyoda-ku Tokyo 100-8310 (JP)
(72) Inventor: TANIGAKI, Tsuyoshi, Tokyo 100-8310 (JP)
(74) Representative: Mewburn Ellis LLP
(86) International application number: PCT/JP2022/014160
(87) International publication number: WO 2023/181304

(57) **Abstract**

In an aluminum alloy, Zn: 5.0-6.5 mass%, Mg: 2.0-3.0 mass%, and Cu: 1.2-2.0 mass% are contained; at least one element among three elements which are Ni: 2.0-5.0 mass%, Ag: 0.5-3.5 mass%, and Li: 0.1-0.4 mass% is contained; contained Si is 0.25 mass% or less and contained Mn is 0.25 mass% or less; remainder is composed of Al and an unavoidable impurity; and tensile strength is 650 MPa or greater. According to this aluminum alloy, an Al alloy with excellent surface treatment properties and high strength can be provided. Higher strength of an Al alloy can reduce product weight. Further, improvement in surface treatment properties can provide stable corrosion resistance and shorten product lead time.

## Description

### Technical Field

The present disclosure relates to an aluminum alloy with high strength and high surface treatment properties.

### Background Art

Light alloy materials meet various needs and are widely used industrially. When considered as mechanical and structural materials, light alloy materials are increasingly used for, for example, automobiles, high-speed railway vehicles, and aerospace. Among lightweight alloys, aluminum alloys are used in major fields in most countries because aluminum alloys are materials which are inexpensive and easy to process. Hereinafter, an aluminum alloy will be referred to as an Al alloy. Improvement in mechanical strength of Al alloys is being studied by material manufacturers. However, the strength of Al alloys is low compared to steel, Ti-based alloys, Ni-based alloys, and so forth. Even A7075-T6 (JIS standard), which is a high-strength commercially available Al alloy, is considered insufficient in terms of mechanical strength for some applications. For this reason, an optimal metal composition for Al alloys has been continuously studied.

For example, in Patent Literature 1, the composition of an Al alloy is required to be set to Zn: 5-12 mass%, Mg: 2-4 mass%, and Cu: 1-2 mass%, and 0.01-0.1 mass% of Ag needs to be further added, so as to obtain a high-strength Al alloy.

Further, in Patent Literature 2, the composition is required to contain Zn: 3.2-8.0 mass%, Mg: 1.2-4.5 mass%, Cu: 0.2-1.5 mass%, Mn: 0.1-1.2 mass%, Cr: 0.1-0.5 mass%, B: 0.005-0.2 mass%, Be: 0.02-1.0 mass% , Ni and/or Co: 0.1-1.2 mass%, Zr and/or Hf: 0.05-1.2 mass%, and Ag: 0.05-2.0 mass%, so as to obtain a high-strength Al alloy.

Further, in Patent Literature 3, the composition is set to contain Zn: 5-11 mass%, Mg: 2-4.5 mass%, Cu: 0.5-2.0 mass%, Mn 2-6 mass%, and Ag 0.01-0.5 mass%, so as to obtain a high-strength Al alloy.

Al alloys are known as base metal following Mg alloys among utility metals, and are known to be easily corroded. Therefore, it is necessary to perform surface treatment such as plating and painting on Al alloy products to provide corrosion resistance. In particular, a machined metal surface develops a plastically deformed layer called a Beilby layer. For this reason, it is common to perform surface treatment after removing the plastically deformed layer by etching with alkali or acid.

### Citation List

### Patent Literature

Patent Literature 1: JP 2008-240141
Patent Literature 2: JP S63-83251
Patent Literature 3: JP 2006-274435

When an A1 alloy is etched with acid or alkali, a black deposit called smut is generated on the surface.

There has been a problem in that smut interferes with a surface treatment process and with adhesion of plating and painting.

### Summary of Invention

### Technical Problem

An object of the present disclosure is to provide an Al alloy on which smut generation is suppressed during a surface treatment process and which is highly strong.

### Solution to Problem

In an aluminum alloy according to the present disclosure,
Zn: 5.0-6.5 mass%, Mg: 2.0-3.0 mass%, and Cu: 1.2-2.0 mass% are contained,
at least one element among three elements which are Ni: 2.0-5.0 mass%, Ag: 0.5-3.5 mass%, and Li: 0.1-0.4 mass% is contained,
contained Si is 0.25 mass% or less and contained Mn is 0.5 mass% or less,
remainder is composed of Al and an unavoidable impurity, and
tensile strength is 650 MPa or greater.

### Advantageous Effects of Invention

According to the Al alloy of the present disclosure, an Al alloy with excellent surface treatment properties and high strength can be provided. Higher strength of an Al alloy can reduce product weight. Further, improvement in surface treatment properties can provide stable corrosion resistance and shorten product lead time.

### Brief Description of Drawings

Fig. 1 is a diagram of Embodiment 1, and is a flowchart showing an Al alloy manufacturing process.
Fig. 2 is a diagram of Embodiment 1, showing cross-sectional SEM images of Al alloys after solidification by slow cooling and rapid cooling.
Fig. 3 is a diagram of Embodiment 1, showing evaluation results of tensile strength and smut generation with respect to compositions of Al alloys.
Fig. 4 is a diagram of Embodiment 1, and is a flowchart of a method for manufacturing an Al alloy in employing an additive manufacturing method using a 3D printer.
Fig. 5 is a diagram of Embodiment 1, explaining the additive manufacturing method.

### Description of Embodiments

### Embodiment 1.

An Al alloy according to Embodiment 1 will be described below. The following description includes an Al alloy which is a raw material alloy and an Al alloy which is finally produced from a raw material alloy. To distinguish between the two, these Al alloys are sometimes referred to as a raw material alloy, and a final alloy which is an Al alloy manufactured from a raw material alloy. Further, a final alloy is sometimes referred to as an "Al alloy (final alloy)". The final alloy is an Al alloy whose powder is solidified in a solidifying step described later.

The Al alloy (final alloy) of Embodiment 1 is manufactured by cold solidification. The tensile strength of the Al alloy (final alloy) of Embodiment 1 is 650 MPa or greater. The Al alloy (final alloy) of Embodiment 1 has a smut film of 1 µm or less when immersed in 10 mass% or more of alkali or 10 mass% or more of acid.

### <S10: Melting step>

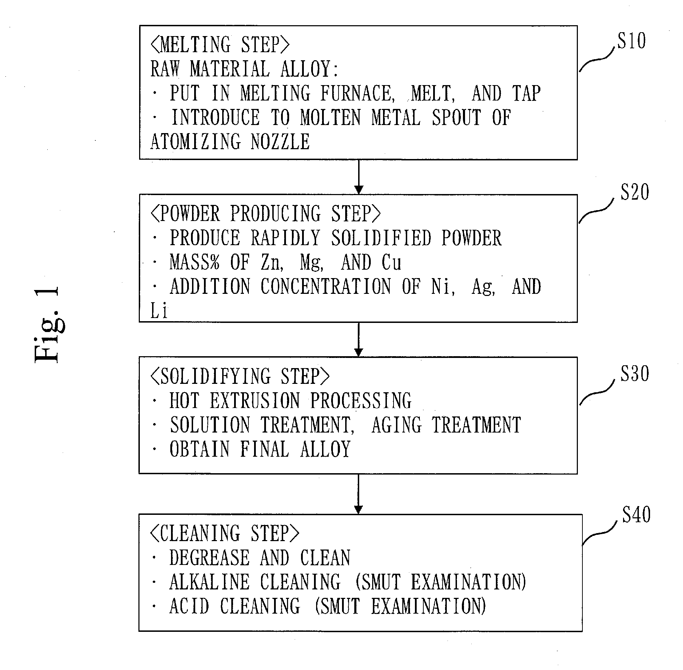

Fig. 1 shows a final alloy manufacturing process. A method for manufacturing a final alloy will be described with reference to Fig. 1. Step S10 is a melting step. In the melting step, the following raw material alloy is placed in a melting furnace, molten at a temperature of 800°C to 1200°C, and tapped. Then, the molten raw material alloy is introduced to a molten metal spout of an atomizing nozzle. The raw material alloy is an Al alloy.

The aluminum alloy which is the raw material alloy has the following composition.
Zn: 5.0-6.5 mass%,
Mg: 2.0-3.0 mass%, and
Cu: 1.2-2.0 mass% are contained; and
at least one element among three elements:
   Ni: 2.0-5.0 mass%,
   Ag: 0.5-3.5 mass%, and
   Li: 0.1-0.4 mass% is contained; and
as other unavoidable metal elements,
   1.0 mass% or less of Ti,
   1.0 mass% or less of Fe, and
   1.0 mass% or less of Zr are contained; and
the remainder is composed of Al.

Here, elements contained in the raw material alloy will be further described later.

### <Step S20: Powder producing step>

Step S20 is a powder producing step. In Step S20, an inert gas such as nitrogen, argon, and helium is injected at high pressure through nozzle holes to produce rapidly solidified Al alloy powder.

### <Mass% of Zn, Mg, and Cu in raw material alloy>

A relation between the mass% of Zn, Mg, and Cu in the raw material alloy and the diameter of crystal particles of powder will be described below. Powder with a particle diameter greater than 300 µm is not rapidly solidified and therefore not employed.

Zn, Mg, and Cu form a coarse intermetallic compound and accordingly,
Zn: 6.5 mass% or less,
Mg: 3.0 mass% or less, and
Cu: 2.0 mass% or less are set.
If
Zn: less than 5.0 mass%,
Mg: less than 2.0 mass%, and
Cu: less than 1.2 mass% are set,
high tensile strength cannot be obtained.
Therefore, Zn, Mg, and Cu are set in concentration ranges:
   Zn: 5.0-6.5 mass%,
   Mg: 2.0-3.0 mass%, and
   Cu: 1.2-2.0 mass%.

Here, the notation "5.0-6.5 mass%" in Zn means "from 5.0 mass% to 6.5 mass% inclusive". Further, the same is applied to the notations Mg: 2.0-3.0 mass%, Cu: 1.2-2.0 mass%, and the like.

### <Addition concentration of Ni, Ag, and Li in raw material alloy>

When the addition concentration of Ni, Ag, and Li is low, the tensile strength of 650 MPa or greater cannot be obtained. On the other hand, when the addition concentration of Ni, Ag, and Li is high, coarse intermetallic compounds are easily formed, and hot cracking easily occurs during solidification.

Therefore, the raw material alloy contains at least one element in the following range of mass% for each of the three elements:
Ni: 2.0-5.0 mass%,
Ag: 0.5-3.5 mass%, and
Li: 0.1-0.4 mass%.

For example, when only Ni is contained, Ni: 2.0-5.0 mass%. When two elements, Ni and Ag, are contained, Ni: 2.0-5.0 mass% and Ag: 0.5-3.5 mass%. When three elements, Ni, Ag, and Li, are contained, respective elements are in the three ranges shown above. When two or more elements among Ni, Ag, and Li are contained, one of these elements may be at the lower limit of the allowable mass% range.

### <Content of Si and Mn in raw material alloy>

In the raw material alloy, contained Si is 0.25 mass% or less and contained Mn is 0.5 mass% or less. The contents of Si and Mn will be described later in relation to smut.

### <Step S30: Solidifying step>

Step S30 is a solidifying step. The rapidly solidified powder of the raw material alloy produced in the powder producing step was densified and solidified by hot extrusion processing. Then, the rapidly solidified powder which was solidified was subjected to solution treatment and aging treatment under tempering conditions equivalent to T6 of A7075 in the JIS standard. Thus, a high-strength Al alloy was obtained as a final alloy

### <Intermetallic compound>

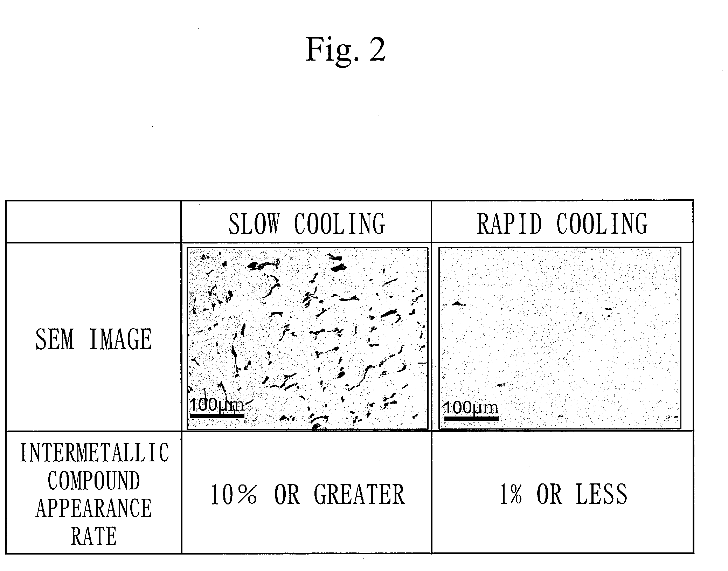

Fig. 2 shows the results of binarizing SEM images, which were obtained by cross-sectional SEM observation, of Al alloys (final alloys) obtained by the manufacturing method shown in the flowchart of Fig. 1. The black colors in the slow cooling and rapid cooling SEM images in Fig. 2 represent precipitation of an intermetallic compound. Fig. 2 shows a length of 100 µm.

In Fig. 2, a coarsened intermetallic compound can be seen in the Al alloy using the slowly cooled raw material alloy powder. The appearance rate of the intermetallic compound in slow cooling was 10% or greater in a field of view of 300 µm×300 µm as a result of cross-sectional observation by SEM.

On the other hand, as shown in Fig. 2, almost no intermetallic compound appears in the Al alloy using the rapidly cooled raw material alloy powder. The appearance rate of the intermetallic compound in rapid cooling was 1% or less in the field of view of 300 µm×300 µm. If the intermetallic compound coarsens, high tensile strength of 650 MPa or greater cannot be obtained.

In Fig. 2, the appearance rate of the intermetallic compound was 1% or less in the field of view of 300 µm×300 µm.

To obtain the tensile strength of 650 MPa or greater, an appearance area, which represents a total area of an intermetallic compound appearing in the Al alloy (final alloy), is preferably 2% or less and more preferably 1% or less in observation with a scanning electron microscope with the field of view of 300 µm×300 µm.

### <Step S40: Cleaning step>

Step S40 is a cleaning step. The manufactured Al alloy (final alloy) is degreased and cleaned to remove organic matters to which oil and the like are attached. Subsequently, alkaline cleaning is performed.

### <Alkaline cleaning>

In alkaline cleaning, the surface is etched by performing immersion in an aqueous solution containing 10 mass% to 20 mass% inclusive of sodium hydroxide or potassium hydroxide at a temperature of 50°C or higher for 10 to 30 seconds, revealing a clean surface.

In addition to sodium hydroxide, any strong alkaline aqueous solution such as potassium hydroxide may be adopted for alkaline cleaning.

### <Smut>

The thickness of smut formed during alkaline cleaning was measured by spectroscopic ellipsometry. If smut is thin and reflected light from underlying metal can be measured, the smut thickness can be measured. When measurement was possible, a measurement result of the smut thickness was 1 µm or less. On the other hand, smut that is thick and exhibits a black color is difficult to measure. When measurement was difficult, the smut thickness was 1 µm or greater. Poor surface treatment properties can be visually determined based on change to a black color caused by thick smut.

### <Acid cleaning>

In acid cleaning, the degreased and cleaned final alloy was immersed in an aqueous solution containing 10 mass% to 20 mass% inclusive of nitric acid. Smut was examined by immersion at a temperature of 50°C or higher for 10 to 30 seconds, employing the same method as the alkaline cleaning. The surface treatment properties were determined based on the smut film thickness and blackening. Here, strong acids such as sulfuric acid and hydrochloric acid may be used or mixed acids may be used for acid cleaning in addition to nitric acid. Further, for mixed acids, weak acids such as phosphoric acid and carbonic acid can be mixed with strong acids. In particular, mixed acids of phosphoric acid and nitric acid and mixed acids of phosphoric acid and sulfuric acid are known as chemical polishing fluids. These are used for improving surface smoothness.

### <Relation between smut and Si, Mn>

Amounts of Si and Mn largely affect thickening and blackening of smut.

The examination found that the followings are desirable:
Si: 0.25 mass% or less, and
Mn: 0.25 mass% or less. Si can lower the melting point of an Al alloy and increase the amount of solid solution of other metal elements. Reducing the addition amount of Si makes it difficult for other metal elements to dissolve as solid solution in an Al alloy, accordingly facilitating precipitation of intermetallic compounds. Therefore, the Al alloy needs to be solidified by rapid cooling. The conditions for rapid solidification are desirably a cooling rate of 100°C/sec or higher.

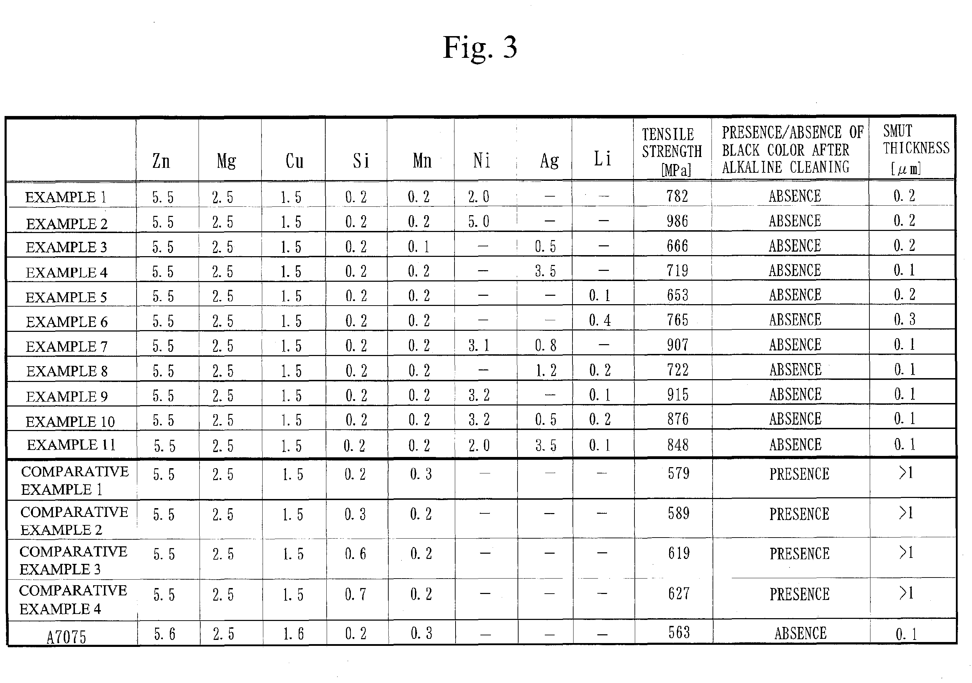

Fig. 3 shows results of surface treatment properties and tensile strength of Al alloys (final alloys) manufactured by the method of Fig. 1. Fig. 3 shows Al alloys of Examples 1 to 11, Comparative examples 1 to 4, and A7075. Examples 1 to 11 are final alloys, and Comparative examples 1 to 4 and A7075 are equivalent to final alloys. In Examples 1 to 11, Zn, Mg, and Cu are Zn: 5.5 mass%, Mg: 2.5 mass%, and Cu: 1.5 mass%. Si and Mn are Si: 0.2 mass% and Mn: 0.1-0.2 mass%. Ni, Ag, and Li are Ni: 2.0-5.0 mass%, Ag: 0.5-3.5 mass%, and Li: 0.1-0.4 mass%. The left side of Fig. 3 shows tensile strength (MPa), presence/absence of black color after alkaline cleaning, and smut thickness (µm) of Al alloys (final alloys).

### ***Description of advantageous effects of Embodiment 1***

Using a raw material alloy having the above-described composition, an Al alloy with excellent surface treatment properties and high strength can be manufactured by the manufacturing method described in Fig. 1. The higher strength of the Al alloy can accordingly reduce product weight.

Further, the improvement in the surface treatment properties can provide stable corrosion resistance and shorten product lead time.

Supplementary information regarding Embodiment 1 will be given.

In order to suppress smut generation due to alkali or acid and to improve surface treatment properties, the smut thickness needs to be set to 1 µm or less. To achieve this, it has been necessary to set the Si content in the Al alloy to 0.25 mass% or less and the Mn content to 0.5 mass% or less. Patent Literature 1 and Patent Literature 2 allow the Si content to be up to 0.25 mass% or greater, and Patent Literature 3 allows the Mn content to be up to 2-6 mass%. Therefore, Patent Literature 1 and Patent Literature 2 cannot achieve the 1 µm or less of smut thickness.

At the same time, it has been necessary to limit the addition amounts of Si and Mn to determine an optimal composition ratio of elements added to the Al alloy.

In order to obtain a high-strength Al alloy whose tensile strength is 650 MPa or higher,
Zn: 5.0-6.5 mass%,
Mg: 2.0-3.0 mass%, and
Cu: 1.2-2.0 mass% are required to be set, and
at least one or more elements of Ni: 2.0-5.0 mass%, Ag: 0.5-3.5 mass%, and Li: 0.1-0.4 mass% is/are required to be contained.

The added elements are preferably dissolved as a solid solution in Al matrix. In addition, higher tensile strength is obtained when inhibiting generation of precipitates, which are coarse intermetallic compounds. Therefore, rapid solidification was employed for manufacturing.

### <Modification: Application to 3D printer>

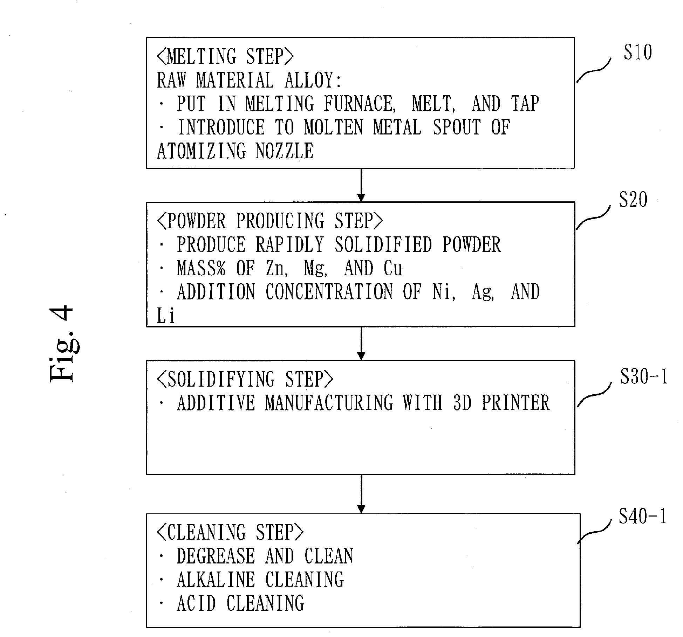

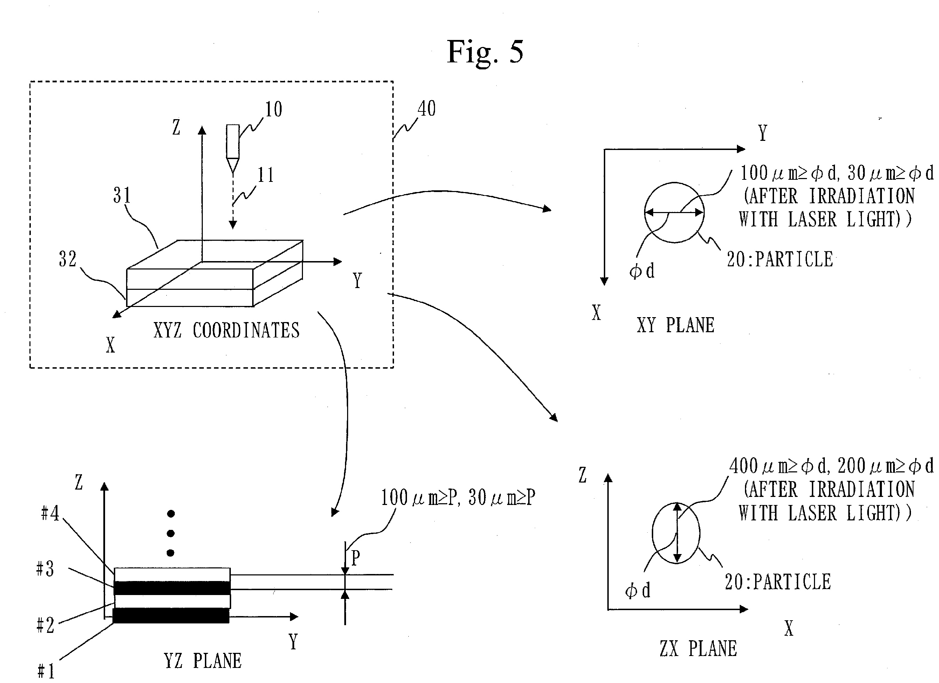

As a modification of Embodiment 1, an application to a 3D printer 40 will be described. Referring to Figs. 4 and 5, a method will be described which is for directly manufacturing a product with the 3D printer 40 using the powder produced in Step S20 by the additive manufacturing method.

Fig. 4 shows a flowchart of a method for manufacturing an Al alloy (final alloy) in employing the additive manufacturing method. Fig. 4 is different from Fig. 1 in that Fig. 4 has Steps S30-1 and S40-1 instead of Steps S30 and S40 of Fig. 1.

Fig. 5 is a diagram for explaining the additive manufacturing method. In Fig. 5, a conceptual perspective view of the 3D printer 40 in XYZ coordinates is shown on the upper left, an XY plane is shown on the upper right, a YZ plane is shown on the lower left, and a ZX plane is shown on the lower right. In the 3D printer 40 in the XYZ coordinates, the powder produced in Step S20 is placed on a base plate 32. The powder will be referred to as the powder 31 hereinafter.

On the XY plane and the ZX plane, a diameter ϕd of a crystal particle 20 is shown. The diameter of the crystal particle 20 is sometimes referred to as the particle diameter.

The powder particle size distribution of the atomized powder produced in the powder producing step in Step S20 is adjusted as follows.
D10: particle diameter from 10 µm to 50 µm inclusive,
D50: particle diameter from 20 µm to 70 µm inclusive, and
D90: particle diameter from 40 µm to 100 µm inclusive.

In the solidifying step of Step S30-1, by adjusting particle diameters, an Al alloy (final alloy) product can be directly manufactured by additive manufacturing using the 3D printer 40.

Step S30-1 will be described with reference to Fig. 5. In Fig. 5, the Z direction is assumed to be the height direction. It is preferable to perform additive manufacturing with a pitch P of 100 µm or less in the Z direction by irradiation with laser light 11 by a laser device 10, and it is more preferable to perform additive manufacturing with the pitch P of 30 µm or less. The YZ plane shows layers #1 to #4. The pitch P between the layers is shown in the YZ plane. By the additive manufacturing as in the YZ plane, products can be manufactured by rapid solidification at 100°C/sec or higher.

### <Concentration of oxygen and nitrogen>

The powder 31 produced in Step S20 is easily oxidized and nitrided because the temperature can be raised and lowered in a short time by irradiation with the laser light 11. Therefore, it is important to control oxygen and nitrogen concentrations. In particular, oxidation causes brittle fracture and therefore, products are preferably manufactured with the 3D printer 40 in a non-oxygen atmosphere, and products are more preferably manufactured in an Ar gas atmosphere. Oxygen contained in a manufactured object manufactured with the 3D printer 40 in the non-oxygen atmosphere is preferably 0.1 mass% or less, and more preferably 0.05 mass% or less.

Nitrogen contained in a manufactured object by the 3D printer 40 is preferably 0.01 mass% or less, and more preferably 0.001 mass% or less.

### <Laser wavelength>

When the laser wavelength of the laser light 11 used for melting the powder 31, which is produced in Step S20, is 700 nm or less, the light absorption rate by Al is reduced. Therefore, the range of the laser wavelength is preferably from 700 nm to 1100 nm inclusive. The Si content of the powder 31 produced in Step S20 is low, whereby the melting temperature is high. Accordingly, it is more preferable to irradiate it at a laser wavelength from 800 nm to 1100 nm inclusive, which is a wavelength range where light is easily absorbed.

### <Diameter ϕd of crystal particle 20 after irradiated with laser light 11>

As the diameter ϕd of the crystal particle 20 of the powder 31 which is rapidly solidified is smaller, the tensile strength is higher. When a product is manufactured with the 3D printer 40, the manufactured product has anisotropy in the diameter cpd of the crystal particles 20 due to the characteristics of the 3D printer 40. When the laser light 11, which is a heat source, is radiated in the Z direction, the diameter ϕd of the crystal particle 20 is elongated in the Z direction. The Z direction is assumed to be the height direction.

As shown in the XY plane of Fig. 5, after irradiated with the laser light 11, the diameter ϕd of the crystal particle 20 is preferably 100 µm or less and more preferably 30 µm or less, in the XY direction, which is a planar direction with respect to the laser light 11 which is the heat source. This particle diameter is a particle diameter for a manufactured product directly manufactured with the 3D printer 40. The XY direction means all directions of 360 degrees on the XY plane with respect to the directions of a double-headed arrow shown as ϕd on the XY plane.

As shown in the ZX plane of Fig. 5, after irradiated with the laser light 11, the diameter ϕd of the crystal particle 20 in the Z direction is preferably 400 µm or less and more preferably 200 µm or less. This particle diameter is a particle diameter for a manufactured product directly manufactured with the 3D printer 40.

As shown in the perspective view of the XYZ coordinates in Fig. 5, a manufactured object by the 3D printer 40 is manufactured on the base plate 32 of aluminum. Manufacturing is preferably performed at 200°C or lower of temperature of the base plate 32.

A product made of high-strength Al alloy can be obtained by implementing one or both of aging treatment and stress relaxation heat treatment to the product without performing solution treatment of the product, after manufacturing with the 3D printer 40.

In Step S40-1 which is a surface treatment, cleaning is performed by using alkali and acid which are the same conditions as in Fig. 1. The cleaning with these makes it possible to check that the smut thickness is 1 µm or less and that there is no blackening in an appearance.

As described above, an Al alloy (final alloy) manufactured by solidification is irradiated with a heat source from a direction along the Z axis in the solidifying step, and the diameter ϕd of the crystal particle 20 has anisotropy with respect to the laser light 11 which is a heat source. The diameter ϕd is 30 µm or less in a cross section parallel to the XY plane, and 200 µm or less in a cross section parallel to the ZX plane. In the Al alloy (final alloy) manufactured by solidification, the contained oxygen is 0.1 mass% or less and the contained nitrogen is 0.01 mass% or less.

### ***Description of advantageous effect of Embodiment 1***

According to the product production with the 3D printer 40 described in Figs. 4 and 5, it is possible to produce products with precision, high strength, and excellent surface treatment properties.

The Al alloy (final alloy) of Embodiment 1 described above is as the following.

In the Al alloy (final alloy),
Zn: 5.0-6.5 mass%, Mg: 2.0-3.0 mass%, and Cu: 1.2-2.0 mass% are contained,
at least one element among three elements which are Ni: 2.0-5.0 mass%, Ag: 0.5-3.5 mass%, and Li: 0.1-0.4 mass% is contained,
contained Si is 0.25 mass% or less and contained Mn is 0.25 mass% or less,
remainder is composed of Al and an unavoidable impurity, and
tensile strength is 650 MPa or greater.

Further, an appearance area, which represents a total area of an intermetallic compound appearing in the Al alloy (final alloy), is 2% or less in observation with a scanning electron microscope with a field of view of 300 µm×300 µm.

### Reference Signs List

10: laser device; 11: laser light; 20: particle; 31: powder; 32: base plate; 40: 3D printer

## Claims

1. An aluminum alloy, wherein
Zn: 5.0-6.5 mass%, Mg: 2.0-3.0 mass%, and Cu: 1.2-2.0 mass% are contained,
at least one element among three elements which are Ni: 2.0-5.0 mass%, Ag: 0.5-3.5 mass%, and Li: 0.1-0.4 mass% is contained,
contained Si is 0.25 mass% or less and contained Mn is 0.25 mass% or less,
remainder is composed of Al and an unavoidable impurity, and
tensile strength is 650 MPa or greater.

2. The aluminum alloy according to claim 1, wherein
an appearance area, the appearance area representing a total area of an intermetallic compound appearing in the aluminum alloy, is 2% or less in observation with a scanning electron microscope with a field of view of 300 µm×300 µm.

3. A method for manufacturing an aluminum alloy, the method comprising:
a melting step of melting a raw material alloy,
which contains Zn: 5.0-6.5 mass%, Mg: 2.0-3.0 mass%, and Cu: 1.2-2.0 mass%,
which contains at least one element among Ni: 2.0-5.0 mass%, Ag: 0.5-3.5 mass%, and Li: 0.1-0.4 mass%,
in which contained Si is 0.25 mass% or less and contained Mn is 0.25 mass% or less, and
whose remainder is composed of Al and an unavoidable impurity;
a powder producing step of producing powder by rapidly solidifying the raw material alloy, the raw material alloy being molten, at a cooling rate of 100°C/sec or higher; and
a solidifying step of solidifying the powder so as to manufacture an aluminum alloy, wherein
tensile strength of the aluminum alloy manufactured by solidification is 650 MPa or greater.

4. The method for manufacturing an aluminum alloy according to claim 3, wherein
the aluminum alloy manufactured by solidification is irradiated with a heat source in a direction along a Z axis in the solidifying step, has anisotropy in a crystal particle diameter with respect to the heat source, the crystal particle diameter being 30 µm or less in a cross section parallel to an XY plane and 200 µm or less in a cross section parallel to a ZX plane, and contains 0.1 mass% or less of oxygen and 0.01 mass% or less of nitrogen.
